# EUROPEAN PATENT APPLICATION

(11) **EP 4 592 454 A1**
(43) Date of publication of application: **30.07.2025**
(21) Application number: 24194324.0
(22) Date of filing: 13.08.2024
(51) Int. Cl.: E02D 3/026, E02D 3/032, E02D 3/074

(54) **ARTICULATED COMPACTION MACHINE**

(30) Priority: 29.08.2023 US 202318239442
(71) Applicant: Wacker Neuson America Corporation, Menomonee Falls, WI 53051 (US)
(72) Inventor: KNUTSON, Donovan, Slinger, WI 53086 (US); HENSCH, Andrew, West Allis, WI 53227 (US)
(74) Representative: Müller Hoffmann & Partner

(57) **Abstract**

An articulated compaction machine implements a system layout that reduces the number of elongate flexible components that are routed between machine segments which must articulate with respect to each other. The machine includes a front-to-back asymmetric housing system with a pair of chassis mounted enclosures, one of which is larger than the other. The larger enclosure may be mounted on a first chassis subframe and define a primary enclosure that houses all components of a hydraulic power unit. The smaller enclosure may be mounted on a second chassis subframe and define an auxiliary enclosure that houses various auxiliary machine components. The primary enclosure may extend more than half of the length of the machine and may include a cantilevered segment that extends beyond the first subframe. The primary enclosure's cantilevered segment may extend across a pivot joint that connects the first and second chassis subframes and across a portion of the chassis' second subframe.

## Description

### BACKGROUND OF THE INVENTION

### 1. Field of the Invention

The present invention relates to vibratory compactors or compaction machines such as trench rollers. More particularly, the invention relates to a layout(s) of the subsystems and/or components within an articulated trench roller or other compaction machine.

### 2. Discussion of the Related Art

Vibratory compactors or compaction machines are used in a variety of ground compaction and ground leveling applications. Most compaction machines have supports in the form of plates, rollers, or drums, that rest on the surface to be compacted. Most of these supports are excited to vibrate so as to compact and level a worked surface.

One common compaction machine is an articulated vibratory trench roller. The typical articulated vibratory trench roller has a pair or front and back machine halves that are substantially symmetrical to each other. The machine halves are connected to each other at a pivot joint that includes a master kingpin, about which the roller articulates to steer. Each of the front and back machine halves includes a vibratory rolling drum that is hydraulically driven into rotation and vibrational excitation by the trench roller's hydraulic system.

Typically, not all of the major hydraulic system components are mounted in the same machine half. The hydraulic pump(s) are often mounted in one machine half while the hydraulic tank and main hydraulic valve manifold are mounted in the other half. Not only are the pump(s) and main hydraulic valve manifold in separate machine halves, but each is typically mounted at the outer longitudinal end or toward an outer longitudinal end wall of the respective machine half, away from the master kingpin.

In this typical layout, long lengths of hydraulic hoses are required to span substantially the entire length of the articulated vibratory trench roller, across the pivot joint. Numerous hydraulic connections or fittings are correspondingly also required to connect these far spaced-apart components. The long lengths of hoses and the numerous hydraulic connections add component costs to the machine and also compromise system efficiency. That is because, comparatively, longer length hoses and those with more connections will experience greater pressure losses than relatively shorter hoses with fewer connections. Hydraulic inefficiencies in internal combustion engine powered trench rollers can lead to excessive fuel consumption. Hydraulic inefficiencies in electric or battery powered trench rollers can lead to reduced runtime from the batteries.

Similar to hydraulic system components, at least some electrical system major components of articulated trench rollers are mounted in different machine halves but need to be electrically connected to each other. This can require numerous electrical connectors and long lengths of conductors or wires bundled within a wiring harness. Additional electrical connectors and long length of wires can lead to increased component expense in order to route major segments of the wire harness across the pivot joint.

Besides the component costs associated with routing hydraulic hoses and wire harnesses across the pivot joint, hoses and wires that span between the machine halves must flex at the pivot joint when the articulated trench roller articulates to steer. The flexing cycles can weaken their materials and can abrasively wear the outer surfaces of the hoses and wires as they rub against each other while flexing.

Thus, it would be desirable to provide an articulated compaction machine with fewer hoses and/or wires routed through a pivot joint.

It would also be desirable to provide an articulated compaction machine with more of its major communicating hydraulic and/or electronic components mounted within a single machine half.

It would also be desirable to provide an articulated compaction machine with its major hydraulic and/or electronic components in close proximity to each other, to reduce the lengths of interconnecting hoses and wires and reduce the number of hydraulic and/or electronic connectors.

### SUMMARY OF THE INVENTION

In accordance with a first aspect of the invention, at least some of the above-discussed challenges are addressed by an articulated compaction machine such as an articulated vibratory trench roller that implements a system, subsystem, or component layout that reduces the number of elongate flexible component that are routed between enclosures that articulate with respect to each other.

In accordance with another aspect of the invention, an articulated compaction machine is provided with an asymmetric configuration having a pair of chassis-mounted enclosures, one of which is substantially larger than the other. The larger or primary enclosure houses all or substantially all of the non-motor or major upstream hydraulic components. This may include housing all components of a hydraulic power unit as well as a hydraulic oil tank and a hydraulic oil cooler in the larger or primary enclosure. In this way, a majority of the machine's primary components that require connection to each other are mounted in close proximity and substantially fixed in position with respect to each other. Corresponding interconnecting hoses, cables, wires, conductors, or other connection-type components are housed in this single enclosure and do not have to flex when the machine articulates to accommodate position changes of components relative to each other.

In accordance with another aspect of the invention, the primary enclosure may be defined at a first machine segment. The first machine segment is pivot-mounted through a pivot joint to a second machine segment that supports a relatively smaller, auxiliary enclosure in which a set of auxiliary components is mounted. The larger, primary enclosure may extend more than half of the length of the machine, across the pivot joint, and may overlap a portion of the second machine segment.

In accordance with another aspect of the invention, major hydraulic components, such as components of a hydraulic power unit, including a hydraulic pump(s) and a hydraulic manifold, are centrally located in the machine. The hydraulic power unit may be mounted in an inner longitudinal end of the primary enclosure, substantially aligned with the machine's pivot joint.

In accordance with another aspect of the invention, the machine's chassis may be segmented, with first and second subframes that are connected to each other at a pivot joint. The first and second subframes correspondingly support first and second machine segments at opposite ends of the machine. The first and second subframes may be the same length as each other while the first and second machine segments may have different overall lengths.

In accordance with another aspect of the invention, a primary enclosure at the first machine segment may extend beyond or be at least partially cantilevered from the first subframe. The length of the primary enclosure may correspond to the first machine segment's overall length. An auxiliary enclosure at the second machine segment may extend only partially along the length of the second subframe. The length of the second subframe may correspond to the second machine segment's overall length.

In accordance with another aspect of the invention, a cantilevered segment of the first machine segment's primary enclosure may extend over the pivot joint and a portion of the second machine segment, such as a portion of the second subframe.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Exemplary embodiments of the invention are illustrated in the accompanying drawings in which like reference numerals represent like parts throughout, and in which:
FIG. 1 is an isometric view of a vibratory trench roller as an articulate compaction machine constructed with a machine system layout according to aspects of the invention;
FIG. 2 is a side elevation view of the trench roller of FIG. 1;
FIG. 3 is another side elevation view of the trench roller of FIG. 1;
FIG. 4 is a side elevation view of an engine powered trench roller;
FIG. 5 is a side elevation view of a battery powered trench roller;
FIG. 6 is a side elevation of a variant of the trench roller of FIG. 3; and
FIG. 7 is a side elevation of a fully-electric trench roller of FIG. 6.

### DETAILED DESCRIPTION

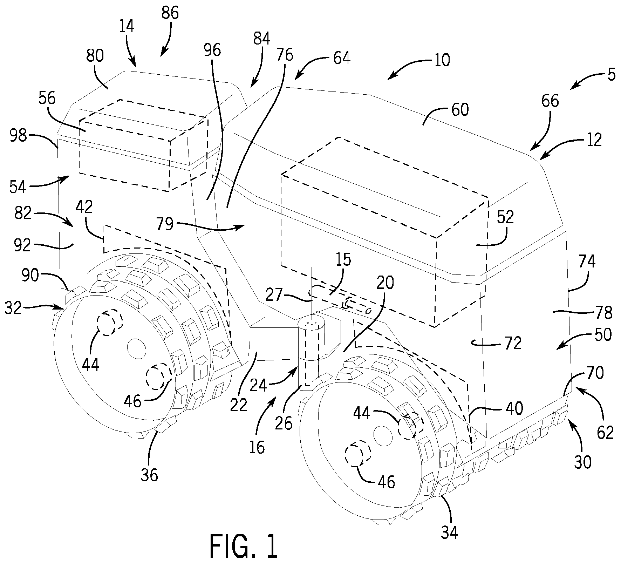

Referring now to FIG. 1, in accordance with an aspect of the invention, an articulated compaction machine and its corresponding system layout is implemented as an articulated vibratory trench roller, shown as trench roller 5, that implements an asymmetric housing system 10 that minimizes or reduces a number of elongate flexible components that are routed between machine segments that articulate with respect to each other. Although shown as trench roller 5, other suitable articulated compaction machines are available from Wacker Neuson America Corporation of Menomonee Falls, Wisconsin.

Still referring to FIG. 1, trench roller 5 is configured for remote operation within a trench or at another compaction-requiring worksite. Trench roller 5 has a segmented configuration with front and back or first and second machine halves of different sizes. These are sown as first and second machine segments 12, 14, implemented as the asymmetric housing system 10. As explained in greater detail elsewhere, asymmetric housing system 10 provides front-to-back asymmetry of housing structures or enclosures in which all or substantially all major components are housed in a common larger enclosure while auxiliary components are housed in a smaller enclosure, reducing a number of component-connecting members such as elongate flexible components that have to be routed between enclosures.

Still referring to FIG. 1, chassis 16 includes a segmented frame as front and back or first and second subframes 20, 22 that are respectively defined at the first and second machine segments 12, 14. Subframes 20, 22 are connected to each other at a pivot joint 24 that includes master kingpin 26. Kingpin 26 defines a vertical pivot axis through pivot joint 24 and about which the first and second machine segment 12, 14 pivot with respect to each other during steering maneuvers. Typically, a steering actuator 15, such as a hydraulic or an electric actuator, connects the subframes 20, 22 to each other. The steering actuator 15 actuates to provide steering, such as extending and retracting a movable rod with respect to a base cylinder, for articulating the first and second subframes 20, 22 with respect to each other about kingpin 26 for steering the roller 5 during the steering maneuvers.

Still referring to FIG. 1, subframes 20, 22 respectively support compacting assemblies 30, 32. Compacting assemblies 30, 32 include vibratory rolling drums 34, 36 that each rotates about a respective axis of rotation. Each drum 34, 36 is shown here with a split configuration with a pair of drum segments that are mounted on opposite sides of a respective drum support 40, 42. Drum supports 40, 42, only partially outlined in phantom in this view, are mounted to the subframes 20, 22 and are aligned with the roller's 5 centerline. Drive and vibration excitation components, shown as drum drive 44 and exciter drive 46 are mounted to the drum supports 40, 42. Drum drive 44 includes a hydraulic motor that selectively delivers torque to a hub upon which the drums 34, 36 are mounted to propel the roller 5 through the engagement of the rotating drums 34, 36 with the underlying word surface that is being compacted. Exciter drive 46 includes a hydraulic motor that selectively delivers torque to a shaft with an eccentric weight to create the vibration that is transmitted through the drums 34, 36 and to the underlying work surface during use.

Still referring to FIG. 1, asymmetric housing system 10 provides a system layout with various grouped systems, subsystems, and components of roller 5 within the respective machine segments 12, 14. A first, larger, enclosure is defined by primary enclosure 50. Primary enclosure 50 is arranged at machine segment 12, mounted to subframe 20. A set of primary components 52 is housed in primary enclosure 50. Primary components 52 typically include major hydraulic components, such as those that are configured for selectively delivering pressurized hydraulic oil to the first and second compacting assemblies 30, 32 for propelling or transmitting vibrations through the machine. A second, smaller (narrower, shorter, and/or shallower), enclosure of asymmetric housing system 10 is defined by auxiliary enclosure 54. Auxiliary enclosure 54 is arranged at the second machine segment 14 and is mounted to subframe 22. A set of auxiliary components 56 is housed in auxiliary enclosure 54. Auxiliary components 56 typically include components that provide supporting-type functions to the primary components 52 or other machine systems.

Still referring to FIG. 1, primary enclosure 50 includes lid 60 that is hinge mounted to an enclosure body 62 to cover its interior space. Primary enclosure 50 has a pair of ends, with an inner longitudinal end 64 and an outer longitudinal end 66 respectively arranged toward and away from the pivot joint 24. Interconnected walls define the primary enclosure body 62, which include bottom wall 70, side walls 72 (only one visible), rear or inner longitudinal end wall 76, and front or outer longitudinal end wall 78. A cantilevered segment 79 of the primary enclosure 50 is a portion of the primary enclosure 50 that extends beyond the first machine segment's 12 supportive first subframe 20.

Still referring to FIG. 1, auxiliary enclosure 54 includes lid 80 that is hinge mounted to an enclosure body 82 to cover its interior space. Auxiliary enclosure 54 has a pair of ends, with an inner longitudinal end 84 and an outer longitudinal end 86 respectively arranged toward and away from the pivot joint 24. Interconnected walls define the auxiliary enclosure body 82, which include bottom wall 90, side walls 92 (only one visible), front or inner longitudinal end wall 96, and back or outer longitudinal end wall 98.

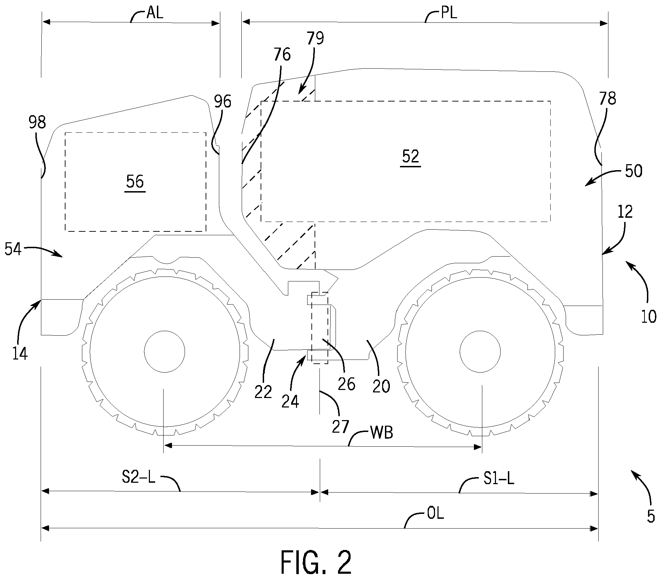

Referring now to FIG. 2, roller 5 has an overall length OL and wheelbase WB. Subframes 20, 22 have respective subframe lengths S1-L, S2-L that are substantially the same as each other, typically within about ten-percent, more typically within about five-percent, and most typically within about three-percent difference of each other. Primary and auxiliary enclosures 50, 54 have respective enclosure lengths PL, AL. The primary enclosure length PL occupies or spans along more than one half of the roller's 5 overall length OL. The auxiliary enclosure length AL occupies or spans along less than one half of the roller's 5 overall length OL. Since the primary enclosure's 50 cantilevered portion 79 extends beyond first subframe 20 and hinge joint 24, the primary enclosure 50 is the longer than the first subframe 20. Correspondingly, the primary enclosure length PL defines the overall length of the roller's 5 first machine segment 12. The second subframe 22 is the longest portion of the second machine segment 14, so the second subframe length S2-L defines the overall length of the second machine segment 14.

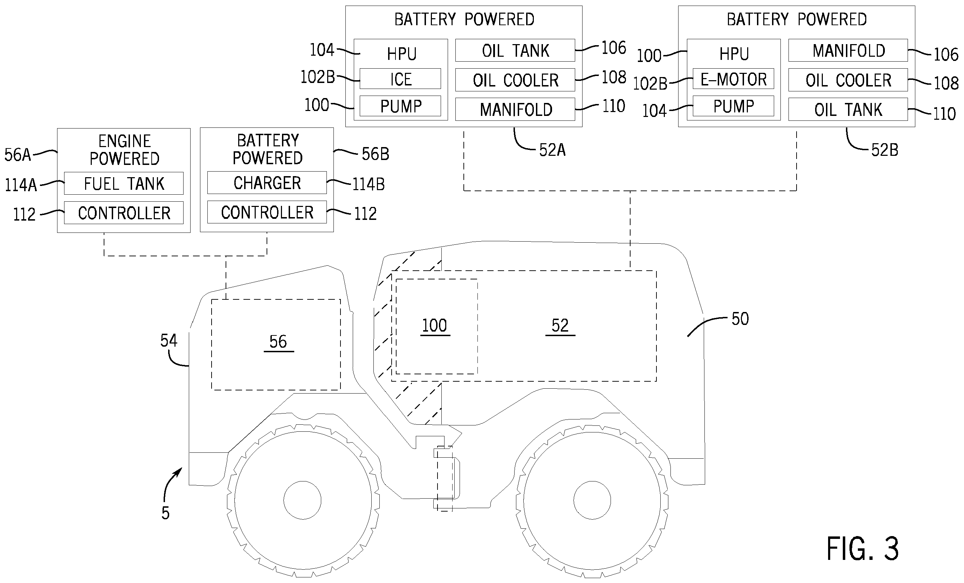

Referring now to FIG. 3, the particular sets of primary and secondary components 52, 56 respectively housed within the primary and auxiliary enclosures 50, 54 depend on the overall configuration(s) of the roller 5. Roller 5 may be implemented with, for example, an engine powered drivetrain or a fully electric battery powered drivetrain to provide power for, e.g., the roller's 5 hydraulic and/or other components. The sets of primary and auxiliary components of the engine powered implementation of roller 5 are schematically represented as a set of primary components 52A and a set of auxiliary components 56A. The sets of primary and auxiliary components of the battery powered implementation of roller 5 are schematically represented as a set of primary components 52B and a set of auxiliary components 56B.

Still referring to FIG. 3, each set of primary components 52A, 52B includes hydraulic power unit 100 that is configured to pressurize hydraulic oil used by other components. The engine powered roller 5 defines an engine-hydraulic powertrain whereas the battery powered roller 5 defines an electric-hydraulic powertrain. In the engine powered set of primary components 52A, hydraulic power unit 100 has a prime mover that is implemented as an internal combustion engine 102A, which is typically a diesel engine. In the battery powered set of primary components 52B, the prime mover is implemented as an electric motor 102B. The prime mover, such as engine 102A or electric motor 102B, delivers power to a hydraulic pump 104, typically through a direct drive relationship or by way of an intermediary gearbox. Pump 104 pressurizes the hydraulic oil and delivers it to hydraulic manifold 106, which has valves such as electronically controlled valves that direct hydraulic oil to other system components. The valves of manifold 106 are selectively controlled by a control system to direct the hydraulic oil to, for example, the hydraulic motor(s) of the drum drive 44 (FIG. 1) to rotate drums 34, 36 (FIG. 1) for propelling the roller 5 and exciter drive 46 (FIG. 1) to vibrate drums 34, 36 (FIG. 1) to enhance compaction. The set of primary components 52A, 52B further include components for cooling and storing the hydraulic oil, sown as oil cooler 108 and oil tank 110.

Still referring to FIG. 3, components of the sets of auxiliary components 56A, 56B also differ to some extent between the engine powered and battery powered rollers 5. Each set of auxiliary components 56A, 56B includes a remote control or controller 112 that provides an HMI (human machine interface) for controlling roller 5. Controller 112 is typically configured as a wireless remote control that, when not in use, is stored and charged within the auxiliary enclosure 54, for example, by mounting in a controller docking station of the auxiliary enclosure 54. When in use, the user manipulates various features of controller 112 to wireless transmit signals that correspond to commands that are executed by the roller's 5 control system, which includes a computer that executes various stored programs while receiving inputs from controller 112 and sending commands to various subsystems or components of roller 5 to execute the desired actions.

Still referring to FIG. 3, the set of auxiliary components 56A, 56B also includes components configured to replenish system energy used by the prime movers or engine 102A and electric motor 102B. In engine powered implementations, fuel tank 114A is mounted in auxiliary enclosure 54. In battery powered implementations, battery charger 114B is mounted in auxiliary enclosure 54.

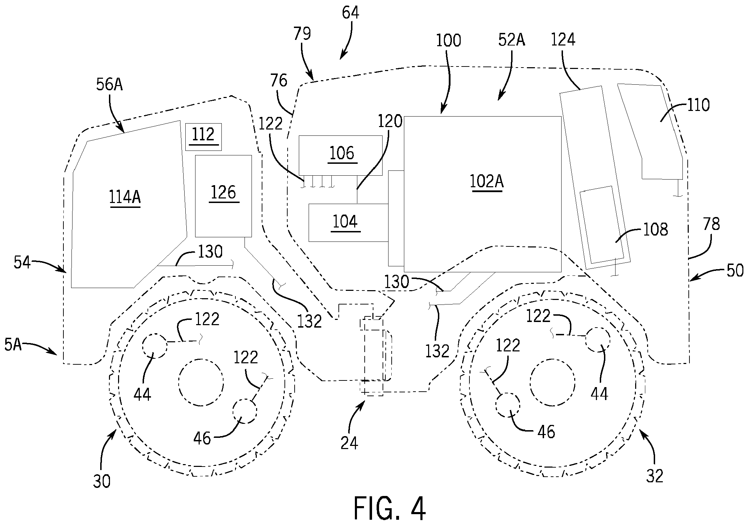

Referring now to FIG. 4, in the engine powered implementation of roller 5 or engine-hydraulic roller 5A, at the primary enclosure's inner longitudinal end 64, portions of the hydraulic power unit 100 are arranged in cantilevered segment 79. Engine 102A and hydraulic pump 104 are shown mounted lengthwise or in a longitudinal orientation. Pump 104 and manifold 106 are mounted adjacent to each other, with manifold 106 overlying pump 104. A set of power unit hoses 120 fluidly connect hydraulic components within the primary enclosure 50 to each other, shown here as connecting the pump 104 and manifold 106 to each other. A set of compacting assembly hydraulic hoses 122, which are longer than power unit hoses 120, are routed between and fluidly connect hydraulic components within the primary enclosure 50 to the first and second compacting assemblies. Radiator 124 is connected to engine 102A to cool the engine's coolant. At the primary enclosure's outer longitudinal end 66, oil cooler 108, oil tank 110, and radiator 124 are mounted toward outer longitudinal end wall 78.

Still referring to FIG. 4, the set of auxiliary components 56A in auxiliary enclosure 54 is shown including controller 112, fuel tank 114A, and battery 126. Fuel line 130 extends between and connects the fuel tank 114A to engine 102A, typically delivering fuel from the fuel tank 114A to a fuel filter or a fuel pump at engine 102A. Battery cable 132 extends between and connects battery 126 to engine 102A, typically connected to a starter solenoid at engine 102A. Fuel line 130 and battery cable 132 are shown as the only major elongate flexible components that are routed between the primary and auxiliary enclosures 50, 54.

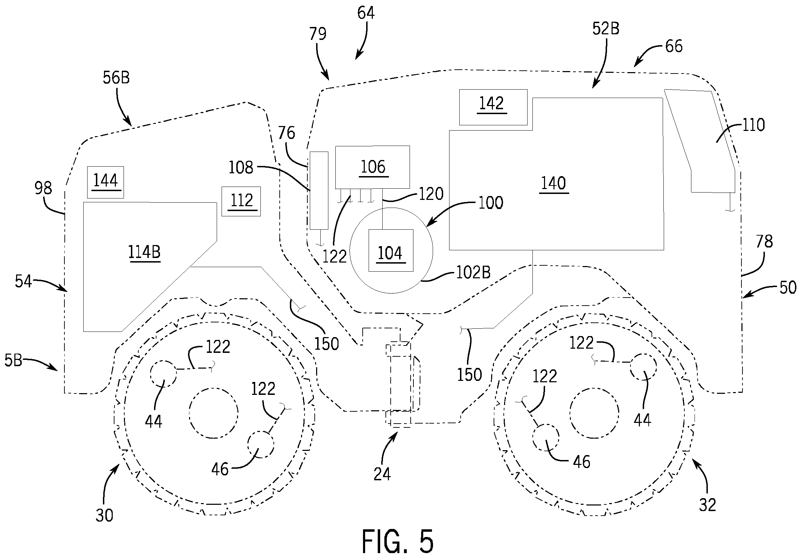

Referring now to FIG. 5, the battery powered implementation of roller 5 or electric-hydraulic roller 5B is shown differing from the engine-hydraulic roller 5A of FIG. 4 in the following ways. In primary enclosure 50, electric motor 102B drives the hydraulic pump 104. Electric motor 102B and hydraulic pump 104 are shown mounted crosswise or in a transverse orientation, with only their ends visible in this view. Oil cooler 108 is mounted adjacent to the primary enclosure's inner longitudinal end wall 76. At an intermediate of middle location within the primary enclosure 50, a bank of batteries or a battery pack, shown as battery 140, is mounted between the hydraulic power unit 100 and the oil tank 110. Various electronic control components for the battery powered implementation of roller 5 are also housed in primary enclosure 50, shown here as motor controller 142 and which typically also includes components of a battery management system.

Still referring to FIG. 5, the set of auxiliary components 56B in the auxiliary enclosure 54 in the battery powered implementation differ from those in the engine powered implementation in the following ways. Battery charger 114B and its charging port 144 are mounted in auxiliary enclosure 54, toward the outer longitudinal end wall 98. A charging cable 150 extends from the battery charger 114B in the auxiliary enclosure 54 to the battery 140 in the primary enclosure 50. Charging cable 150 is shown as the only major elongate flexible component that is routed between the primary and auxiliary enclosures 50, 54.

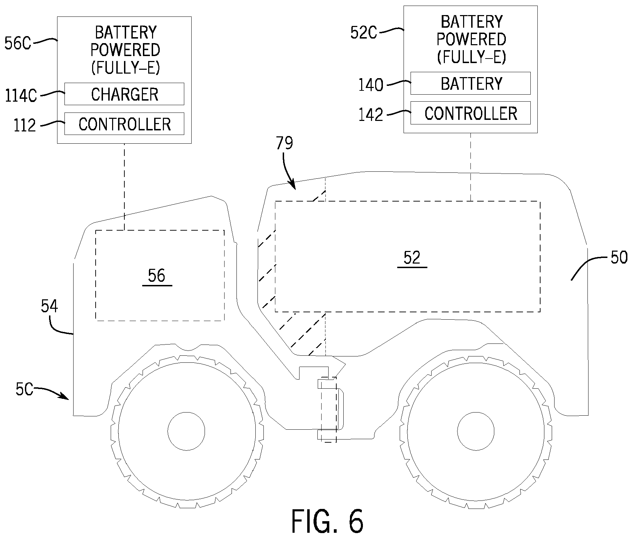

Referring now to FIGS. 6-7, the roller 5 shown here is a fully-electric machine or a fully-electric roller 5C. The fully-electric roller 5C does not include, for example, the hydraulic pumps, hydraulic oil coolers, or other hydraulic components such as those in the above-described engine-hydraulic and electric-hydraulic rollers 5A, 5B (FIGS. 4-5) that include hydraulic travel or propulsion and vibration systems.

Referring now to FIG. 6, the set of primary components 52C of the fully-electric roller 5C is shown including battery 140 and motor controller 142. Like the set of secondary components 56B (FIG. 3) of the battery powered roller 5 (FIG. 3), the set of secondary components 56C of fully-electric roller 5 is shown including controller 112 and charger 114C.

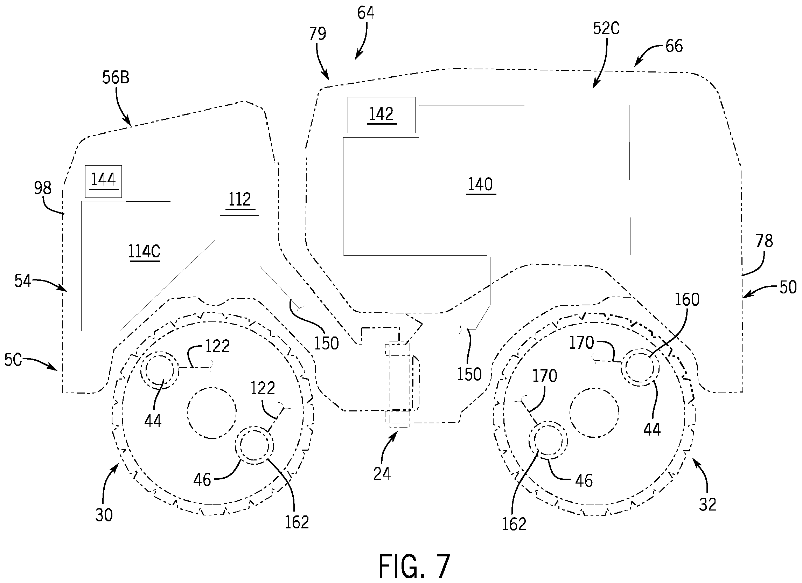

Referring now to FIG. 7, fully-electric rollers 5C typically has substantially the same overall system, subsystem, and component layout as the above-described electric-hydraulic roller 5B (FIG. 5). Unlike the electric-hydraulic roller 5B (FIG. 5), fully-electric roller 5C does not implement a hydraulic pump-driving electric motor 102B (FIG. 5). Instead, the fully-electric roller 5C implements an electric motor 160 as a prime mover the drum drive 44 in each of the drums 34, 36 and also incorporates electric motors 162 instead of hydraulic motors in the exciter drives 46 to provide vibration excitation. Instead of hydraulic lines 122 (FIG. 4-5), electrical conductors such as wires or cables 170 connect the electric motors 160, 162 to cooperating components of the corresponding travel or propulsion drive systems and vibration excitations systems.

Similar to the elimination or length reduction of various hydraulic hoses and fittings in the above-described engine-hydraulic roller 5A (FIG. 4) and electric-hydraulic roller 5B (FIG. 5), fully-electric roller 5C typically has major electronic components that are centrally located, including various ones within the cantilevered segment 79, and arranged with respect to each other in a manner that eliminates or reduces the length of various electrical conductors or wires. The fully-electric roller 5C has its components arranged with respect to each other and within the asymmetric housing system 10 in a manner that provides substantially the same weight distribution as those of the engine-hydraulic roller 5A (FIG. 4) and electric-hydraulic roller 5B (FIG. 5) rollers 5, with a front-to-back weight ratio of approximately 50 / 50, typically within 25%, more typically within 15%, and most typically within 10%.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

As indicated above, many changes and modifications may be made to the present invention without departing from the spirit thereof. The scope of some of these changes is discussed above. The scope of others is apparent from the appended claims.

## Claims

1. An articulated compaction machine comprising:
a chassis that includes:
a first subframe that supports a first machine segment at a first end of the machine;
a first compacting assembly that is defined at the first machine segment and that is configured to selectively propel and transmit vibrations through the machine into an underlying work surface;
a second subframe that supports a second machine segment;
a second compacting assembly that is defined at the second machine segment and that is configured to selectively propel and transmit vibrations through the machine into an underlying work surface; and
a pivot joint that connects the first and second machine segments to each other;
wherein:
at least a portion of the first machine segment is vertically aligned with the pivot joint.

2. The machine of claim 1, further comprising an asymmetric housing system that includes:
a first enclosure that is supported at the first machine segment;
a second enclosure that is supported at the second machine segment; and wherein:
the first enclosure is longer longitudinally than the second enclosure; and
a portion of the first enclosure extends longitudinally beyond the pivot joint and overlaps a portion of the second machine segment.

3. The machine of claim 2, wherein:
the first enclosure defines a primary enclosure that surrounds a set of primary components; and
at least some of the primary components are arranged in vertical alignment with the pivot joint.

4. The machine of claim 3, wherein the set of primary components includes a hydraulic power unit having:
a prime mover;
a hydraulic pump that receives power from the prime mover to pressurize hydraulic oil;
a hydraulic manifold communicating with the hydraulic pump and selectively delivering the hydraulic oil to the first and second compacting assemblies.

5. The machine of claim 4, wherein at least one of the hydraulic pump and the hydraulic manifold is vertically aligned with the pivot joint.

6. The machine of claim 4, wherein:
the primary enclosure defines an inner longitudinal end arranged toward the pivot joint and an outer longitudinal end arranged away from the pivot joint; and
the hydraulic pump and the hydraulic manifold are mounted in the inner longitudinal end of the primary enclosure.

7. The machine of claim 6, further comprising an oil cooler, and wherein the oil cooler:
receives hydraulic oil from the hydraulic power unit for cooling the hydraulic oil; and
is mounted in an outer longitudinal end portion of the primary enclosure.

8. The machine of claim 4, further comprising an auxiliary enclosure defined at the second machine segment and surrounding a set of auxiliary components; and
wherein:
none of the components of the set of auxiliary components are arranged in vertical alignment with the pivot joint.

9. The machine of claim 8, wherein:
the first compacting assembly includes a first drum that defines a first axis of rotation and that is configured to engage the underlying work surface;
the second compacting assembly includes a second drum that defines a second axis of rotation and that is configured to engage the underlying work surface;
each of the first and second compacting assemblies includes a drum that defines a respective axis of rotation;
the primary enclosure includes:
a primary enclosure outer longitudinal end wall that faces away from the auxiliary enclosure;
a primary enclosure inner longitudinal end wall that faces toward the auxiliary enclosure;
the auxiliary enclosure includes:
an auxiliary enclosure outer longitudinal end wall that faces away from the primary enclosure;
an auxiliary enclosure inner longitudinal end wall that faces toward the primary enclosure; and
each of the primary enclosure longitudinal inner longitudinal end walls and the auxiliary enclosure longitudinal inner longitudinal end walls is arranged between the pivot joint and an axis of rotation of the drum of the second compacting assembly.

10. The machine of claim 9, wherein:
the set of primary components includes a hydraulic oil tank and an oil cooler; and
each of the hydraulic oil tank and the oil cooler is arranged longitudinally between the primary enclosure outer longitudinal end wall and the axis of rotation of the drum of the first compacting assembly.

11. The machine of claim 8, further comprising:
a set of power unit hydraulic hoses that are routed entirely within the primary enclosure and that fluidly connect hydraulic components within the primary enclosure to each other;
a set of compacting assembly hydraulic hoses that that are routed between and fluidly connect hydraulic components within the primary enclosure to the first and second compacting assemblies.

12. The machine of claim 11, wherein:
the prime mover is an internal combustion engine;
the set of auxiliary components includes:
a fuel tank
a fuel line that extends from the fuel tank in the auxiliary enclosure to the engine in the primary enclosure;
a battery;
a battery cable that extends from the battery in the auxiliary enclosure to the engine in the primary enclosure; and
the fuel line and the battery cable are the only components that are routed between interiors of the primary and auxiliary enclosures.

13. The machine of claim 11, wherein:
the prime mover is an electric motor;
the set of primary components includes:
a motor controller;
a battery for energizing the electric motor;
the set of auxiliary components includes:
a battery charger
a charging cable that extends from the battery charger in the auxiliary enclosure to the battery in the primary enclosure; and
the charging cable is the only component that is routed between interiors of the primary and auxiliary enclosures.

14. An articulated compaction machine that is configured for remote controlled operation by a user, the machine comprising:
a chassis that includes:
a first subframe;
a first vibratory rolling drum supported by the first subframe;
a second subframe;
a second vibratory rolling drum that is supported by the second subframe;
a pivot joint that connects the first and second machine segments to each other;
an asymmetric housing system that includes:
a primary enclosure that supported by the first subframe and that defines a cantilevered segment that extends longitudinally beyond the first subframe;
a hydraulic power unit that is mounted within the primary enclosure;
an auxiliary enclosure that is supported by the second subframe;
a set of auxiliary components that are mounted within the auxiliary enclosure; and
wherein:
the primary enclosure occupies more of an overall longitudinal length of the machine than the auxiliary enclosure, and
the cantilevered segment of the primary enclosure overlies the pivot joint.

15. The machine of claim 14, wherein:
the pivot joint includes a kingpin that extends vertically and that defines a pivot axis of the pivot joint; and
at least a portion of the hydraulic power unit is arranged in the cantilevered segment of the primary enclosure and overlies the kingpin.

16. The machine of claim 15, wherein:
the hydraulic power unit includes:
a prime mover;
a hydraulic pump that receives power from the prime mover;
a hydraulic manifold that is connected to the hydraulic pump and delivers hydraulic oil to rotate and/or vibrate the first and second vibratory rollers; and
at least one of the hydraulic pump and the hydraulic manifold overlie the pivot joint.

17. The machine of claim 16, wherein:
the prime mover is an internal combustion engine;
the set of primary components further includes:
a radiator for cooling the engine,
an oil cooler for cooling the hydraulic oil, and
an oil tank for storing a volume of the hydraulic oil;
the hydraulic pump and the hydraulic manifold are arranged at an inner longitudinal end of the primary enclosure proximate the pivot joint;
the radiator, the oil cooler, and the oil tank are arranged at an outer longitudinal end of the primary enclosure distal the pivot joint; and wherein
the engine is arranged between (i) the hydraulic pump and the hydraulic manifold at the inner longitudinal end of the primary enclosure, and (ii) the radiator, the oil cooler, and the oil tank at the outer longitudinal end of the enclosure.

18. The machine of claim 16, wherein:
the prime mover is an electric motor
the set of primary components further includes:
a motor controller,
a battery for energizing the electric motor,
an oil cooler for cooling the hydraulic oil, and
an oil tank for storing a volume of the hydraulic oil;
the hydraulic pump, the hydraulic manifold, and the oil cooler are arranged at an inner longitudinal end of the primary enclosure proximate the pivot joint;
the oil tank is arranged at an outer longitudinal end of the primary enclosure distal the pivot joint; and wherein
the battery and motor controller are arranged between (i) the hydraulic pump, the hydraulic manifold, and the oil cooler at the inner longitudinal end of the primary enclosure, and (ii) the oil tank at the outer longitudinal end of the enclosure.

19. An articulated compaction machine comprising:
a chassis that includes:
a first subframe that supports a first machine segment at a first longitudinal end of the machine;
a first compacting assembly that is defined at the first machine segment and that configured to selectively propel and transmit vibrations through the machine into an underlying work surface;
a second subframe that supports a second machine segment;
a second compacting assembly that is defined at the second machine segment and that is configured to selectively propel and transmit vibrations through the machine into an underlying work surface;
a pivot joint that connects the first and second machine segments to each other;
an asymmetric housing system that includes:
a first enclosure that is supported at the first machine segment;
a second enclosure that is supported at the second machine segment; and
wherein:
the first enclosure is longitudinally longer than the second enclosure; and
a portion of the first enclosure extends longitudinally beyond the pivot joint and defines a cantilevered segment that overlaps a portion of the second machine segment.

20. The machine of claim 19, wherein:
each of the first and second compacting assemblies includes:
a drum that engages the underlying work surface;
an electric motor that drives rotation of the drum for propelling the machine;
the first enclosure defines a primary enclosure that houses a set of primary components, with the set of primary components including:
a battery for engerizing the electric motor in each of the first and second compacting assemblies.
